(19) Europäisches Patentamt
European Patent Office
Office européen des brevets

(11) **EP 4 521 481 A1**

(12) **EUROPEAN PATENT APPLICATION**
published in accordance with Art. 153(4) EPC

(43) Date of publication:
**12.03.2025   Bulletin 2025/11**

(21) Application number: **23886287.4**

(22) Date of filing: **01.11.2023**

(51) International Patent Classification (IPC):
*H01M 4/13* (2010.01)     *H01M 4/133* (2010.01)
*H01M 4/134* (2010.01)     *H01M 4/36* (2006.01)
*H01M 4/38* (2006.01)     *H01M 4/583* (2010.01)
*H01M 10/052* (2010.01)     *H01M 10/0562* (2010.01)
*H01M 4/02* (2006.01)

(52) Cooperative Patent Classification (CPC):
H01M 4/02; H01M 4/13; H01M 4/133; H01M 4/134;
H01M 4/36; H01M 4/38; H01M 4/583;
H01M 10/052; H01M 10/0562

(86) International application number:
**PCT/KR2023/017305**

(87) International publication number:
**WO 2024/096591 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  02.11.2022   KR 20220144769
31.10.2023   KR 20230148135

(71) Applicant: **LG Energy Solution, Ltd.
Seoul 07335 (KR)**

(72) Inventors:
• CHOI, Ran
  **Daejeon 34122 (KR)**
• YOM, Jeeho
  **Daejeon 34122 (KR)**
• KIM, Sulcham
  **Daejeon 34122 (KR)**
• LEE, Dong Chan
  **Daejeon 34122 (KR)**
• HAN, Dakyung
  **Daejeon 34122 (KR)**
• JUNG, Yi Jin
  **Daejeon 34122 (KR)**
• KIM, Na Yoon
  **Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **ANODE, AND LITHIUM ION SECONDARY BATTERY COMPRISING ANODE**

(57)     The present invention provides a negative electrode comprising a current collector and a negative electrode active material layer, and a lithium-ion secondary battery comprising the negative electrode, wherein the negative electrode active material layer comprises one or more layers, and wherein any one of the one or more layers of the negative electrode active material layer contains oxygen in an amount of 2 to 10 at%.

**(Cont. next page)**

EP 4 521 481 A1

【Figure 8】

**Description**

[Technical Field]

The present application claims the benefits of priorities based on Korean Patent Application No. 10-2022-0144769 filed on November 02, 2022 and Korean Patent Application No. 10-2023-0148135 filed on October 31, 2023, all the contents of which are incorporated herein by reference.

The present invention relates to a negative electrode and a lithium-ion secondary battery including the negative electrode.

[Background Art]

Recently, an all-solid-state secondary battery using a solid electrolyte as an electrolyte is attracting attention. In order to improve the energy density of such an all-solid-state secondary battery, it has been proposed to use lithium as a negative electrode active material. The capacity density (capacity per unit weight) of lithium is about 10 times the capacity density of graphite which is commonly used as a negative electrode active material. Therefore, if lithium is used as a negative electrode active material, it is possible to increase the output while thinning the all-solid-state secondary battery.

As an all-solid-state lithium-ion secondary battery, for example, an anodeless lithium-ion secondary battery comprising a negative electrode active material layer containing metal, which forms an alloy with lithium, and carbon material is known.

The anodeless lithium-ion secondary battery as described above is driven by a mechanism in which during charging, metal lithium is precipitated between the negative electrode active material layer, the negative electrode active material layer and the current collector, and during discharging, the corresponding metal lithium is ionized and moves toward the positive electrode.

The negative electrode active material layer is formed as a very thin film having a micro thickness, but there was a problem that it is difficult to form a negative electrode active material layer having a low surface roughness.

[Prior art document]

[Patent document]

Korean Laid-open Patent Publication No. 10-2015-0064697

[Disclosure]

[Technical Problem]

The present invention has been devised to solve the above problems of the prior art, and it is an object of the present invention to provide a negative electrode that greatly improves the operating characteristics of a battery by uniformly distributing the carbon material and metal in the negative electrode active material layer, and remarkably improving the surface roughness, and a lithium-ion secondary battery with improved performance comprising the same.

[Technical Solution]

In order to achieve the above object, the present invention provides a negative electrode comprising

a current collector and a negative electrode active material layer,
wherein the negative electrode active material layer comprises one or more layers, and
wherein any one of the one or more layers of the negative electrode active material layer contains oxygen in an amount of 2 to 10 at%.

In addition, the present invention provides a lithium-ion secondary battery comprising the negative electrode described above, a positive electrode, and an electrolyte interposed between the negative electrode and the positive electrode.

[Advantageous Effects]

The negative electrode of the present invention provides the effect of greatly improving the operating characteristics of the battery, by comprising a negative electrode active material layer in which the carbon material and metal are uniformly distributed and the surface roughness is significantly improved.

In addition, the lithium-ion secondary battery of the present invention provides excellent operating characteristics by comprising the negative electrode active material layer.

[Description of Drawings]

FIGS. 1 and 2 are cross-sectional views schematically showing the structure of the lithium-ion secondary battery of the present invention.

FIG. 3 is a graph showing the particle size distribution of the carbon material-metal composite of the present invention.

FIG. 4 is a graph showing the analysis results of the rheological properties of the slurry of the negative electrode active material containing the carbon material-metal composite of the present invention.

FIGS. 5 and 6 are graphs showing the cycle characteristics of a lithium-ion secondary battery comprising a negative electrode active material layer containing the carbon material-metal composite of the present invention.

FIG. 7 shows the 1s spectrum of carbon (C) contained in the negative electrode active material layers prepared in Example 2, Comparative Example 3, and Comparative Example 4.

FIG. 8 shows the peak deconvolution results in the O 1s spectrum for oxygen contained in the negative electrode active material layers prepared in Example 2, Comparative Example 3, and Comparative Example 4.

FIG. 9 shows SEM images of the surfaces of the negative electrode active material layers stacked on the negative electrodes prepared in Example 2 of the present invention and Comparative Example 5.

FIG. 10 shows laser confocal microscope photographs showing the measurement results of the surface roughness of the negative electrode active material layers stacked on the negative electrodes prepared in Example 2 of the present invention and Comparative Example 5.

[Best Mode]

Hereinafter, the present invention will be described in more detail to help the understanding of the present invention.

The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible. Also, the terminology used herein is used only to describe exemplary embodiments, and is not intended to limit the present invention. The singular expression comprises the plural expression unless the context clearly dictates otherwise.

When it is mentioned that a certain component "is connected, provided, or installed" to another component, it should be understood that it may be directly connected or installed to another component, but other components may also exist in between. On the other hand, when it is mentioned that a certain component is "directly connected or installed" to another component, it should be understood that other component does not exist in between. Meanwhile, other expressions describing the relationship between the components, such as "on top" and "directly on top" or "between" and "immediately between" or "neighboring to" and "directly neighboring to", etc., should also be interpreted similarly.

As used herein, the term "combination" comprises mixtures, alloys, reaction products, and the like, unless specifically stated otherwise.

The electrode of the present invention comprises a current collector and a negative electrode active material layer,

wherein the negative electrode active material layer comprises one or more layers, and
wherein any one of the one or more layers of the negative electrode active material layer contains oxygen in an amount of 2 to 10 at%.

The lower limit of the oxygen content may be 2.5 at% or more, 3 at% or more, 3.5 at% or more, 4 at% or more, 4.5 at% or more, or 5 at% or more. In addition, the upper limit of the oxygen content may be 9.5 at% or less, 9 at% or less, 8.5 at% or less, 8 at% or less, 7.5 at% or less, 7 at% or less, 6.5 at% or less, 6 at% or less, 5.5 at% or less, 5 at% or less, 4.5 at% or less, 4 at% or less, 3.5 at% or less, or 3 at% or less. The oxygen content may be a range constituted by a combination of the lower limit and the upper limit. Specifically, the oxygen may be preferably contained in an amount of 2.5 to 10 at%.

In the above, if oxygen is contained in an amount of less than 2 at%, it is not preferable because the surface roughness of the negative electrode active material layer is significantly reduced, and if oxygen exceeds 10 at%, it is not preferable because the performance of the battery is deteriorated due to a side reaction with the solid electrolyte.

In one embodiment of the present invention, any one of the one or more layers of the negative electrode active material layer may further contain 65 to 85 at% of carbon and 0.5 to 5 at% of a metal element, and more preferably 74 to 85 at% of carbon and 0.5 to 3 at% of a metal element.

In one embodiment of the present invention, any one of the one or more layers of the negative electrode active material layer may further contain 5 to 25 at% of fluorine (F), and more preferably 10 to 20 at% of fluorine (F).

In one embodiment of the present invention, any one of the one or more layers of the negative electrode active material layer may further contain 0.01 to 1 at% of sulfur (S), and more preferably 0.01 to 0.5 at% of sulfur (S).

In one embodiment of the present invention, any one of the one or more layers of the negative electrode active material layer may contain 2 to 10 at% of oxygen, 65 to 85 at% of carbon, 0.5 to 5 at% of a metal element, and 5 to 25 at% of fluorine (F).

In addition, any one of the one or more layers of the negative electrode active material layer may contain more preferably 2.5 to 5 at% of oxygen, 74 to 85 at% of carbon, 0.5 to 3 at% of a metal element, and 10 to 20 at% of fluorine (F).

In addition, any one of the one or more layers of the negative electrode active material layer may further contain sulfur (S) in addition to the above components.

In the above, the composition ratio of the negative electrode active material layer may be measured using an optoelectronic spectrometer (XPS or ESCA). For example, the composition ratio of the negative electrode active material layer may be measured using a Nexsa4 (Thermo Fisher Scientific) device.

In one embodiment of the present invention, any one of the one or more layers of the negative electrode active material layer may include carbon material particles and metal particles, and the carbon material particles may be, for example, amorphous carbon material particles. However, the carbon material particles are not limited to the amorphous particles. Specific examples of the amorphous carbon material may be carbon black such as acetylene black, furnace black and Ketjen black, graphene, or a combination thereof.

If the amorphous carbon material particles contain pores, the size of the pores may be 1nm or less, preferably 0.5nm or less. However, it may be more preferable that the amorphous carbon material particles do not contain pores. This is because, if the amorphous carbon material particles contain pores, lithium may precipitate inside the pores, this lithium may be inactivated, and the amount of lithium thus inactivated may increase as charging and discharging are repeated.

The size of the pores in the amorphous carbon material particles can be measured, for example, through a nitrogen adsorption experiment or through a transmission electron microscope.

The carbon material particles may be carbon material particles containing 3 to 10 at% of oxygen. In the above, if oxygen is contained in an amount of less than 3 at%, it is not preferable because the surface roughness of the negative electrode active material layer is significantly reduced. If oxygen exceeds 10 at%, it is not preferable because the performance of the battery is deteriorated due to a side reaction with the solid electrolyte.

In the above, the lower limit of the oxygen content may be 3.5 at% or more, 4 at% or more, or 4.5 at% or more. Also, the upper limit of the oxygen content may be 9.5 at% or less, 9 at% or less, 8 at% or less, 7.5 at% or less, 7 at% or less, 6.5 at% or less, 6 at% or less, or 5.5 at% or less. The oxygen content may be a range constituted by a combination of the lower limit and the upper limit. Specifically, the oxygen content may be preferably 5 to 10 at%.

In one embodiment of the present invention, the oxygen may exist in a form contained in a functional group bonded to the carbon material particle. In addition, the functional group may comprise one or more selected from the group consisting of a carboxy group, a hydroxyl group, an ether group, an ester group, an aldehyde group, a carbonyl group, and an amide group.

The carbon material particle containing oxygen in an amount of 3 to 10 at% can be produced by, for example, a method of oxidizing the carbon material. Specifically, oxygen functional groups can be introduced into the surface of the carbon material, by treating the carbon material with an acid and reacting it at a temperature of 25 °C to 60 °C while stirring it. The type of the acid is not particularly limited, and any acid capable of introducing an oxygen functional group to the surface of the carbon material may be used. The acid may comprise, for example, sulfuric acid, nitric acid, or a mixture thereof, and an oxidizing agent such as potassium permanganate may be used.

The content of oxygen contained in the carbon material may be measured using an optoelectronic spectrometer (XPS or ESCA). For example, the content of oxygen contained in the carbon material may be measured using a K-Alpha (Thermo Fisher Scientific) device.

In one embodiment of the present invention, the oxygen may be present on the surface of the carbon material particle. The surface does not mean only the outer surface of the carbon material particle, and comprises the surface of pores when the pores are present.

In one embodiment of the present invention, the metal particle may be a particle that forms an alloy with lithium, and the metal particle may be one or more particles selected from silver (Ag), gold, platinum, palladium, silicon, aluminum, bismuth, tin, indium, and zinc.

In one embodiment of the present invention, it may be preferable that the metal particle comprises silver (Ag).

In one embodiment of the present invention, any one of the one or more layers of the negative electrode active material layer may have the following surface roughness characteristics:

$$0.01 \ \mu m \ \leq \ Sa \ \leq \ 0.3 \ \mu m$$

$$0.5 \ \mu m \ \leq \ Sz \ \leq \ 5 \ \mu m$$

$$500 \ mm^{-1} \ \leq \ Spc \ \leq \ 1500 \ mm^{-1}$$

$$0.005 \ \leq \ Sdr \ \leq \ 0.15.$$

If the surface roughness satisfies the above range, overall characteristics of the battery may be improved and in particular, lifetime characteristics may be improved. Specifically, if the surface roughness of the negative electrode active material layer exceeds the above range, since the contact with the electrolyte layer is not made sufficiently in the direction toward the electrolyte and it is not helpful for uniform precipitation of lithium in the direction toward the negative electrode current collector, the characteristics of the battery may be deteriorated.

In the above, the surface roughness of the negative electrode active material layer may be measured using a microscope device. For example, the surface roughness may be measured using a 3D laser confocal microscope (manufactured by KEYENCE company) device.

In the above, Sa (arithmetic mean height of the profile) may be at most 0.3 $\mu m$ or less, 0.2 $\mu m$ or less, 0.1 $\mu m$ or less, 0.08 $\mu m$ or less, or 0.075 $\mu m$ or less, and at least 0.01 $\mu m$ or more, 0.02 $\mu m$ or more, 0.03 $\mu m$ or more, 0.04 $\mu m$ or more, 0.05 $\mu m$ or more, 0.06 $\mu m$ or more, or 0.07 $\mu m$ or more. In addition, the Sa may be more preferably in the range of $0.01 \ \mu m \leq Sa \leq 0.1 \ \mu m$, but is not limited to these ranges, and may be set to a range of a combination of the maximum and minimum values. The Sa represents the average value of the absolute value of the height difference between each point with respect to the average surface of the surface.

In the above, the Sz (maximum height roughness of the profile) may be at most 5 $\mu m$ or less, 4 $\mu m$ or less, 3 $\mu m$ or less, 2 $\mu m$ or less, or 1.5 $\mu m$ or less, and at least 0.5 $\mu m$ or more, 0.8 $\mu m$ or more, 1 $\mu m$ or more, 1.1 $\mu m$ or more, 1.2 $\mu m$ or more, or 1.3 $\mu m$ or more. In addition, the Sz may be more preferably in the range of $0.5 \ \mu m \leq Sz \leq 1.6 \ \mu m$, but is not limited to these ranges, and may be set to a range of a combination of the maximum and minimum values. The Sz represents the maximum height roughness in a single plane, that is, the distance between the highest point and the lowest point in the single plane.

In the above, Spc (roughness by number of peaks) may be at most 1500 mm$^{-1}$ or less, 1400 mm$^{-1}$ or less, 1300 mm$^{-1}$ or less, 1200 mm$^{-1}$ or less, 1100 mm$^{-1}$ or less, or 1000 mm$^{-1}$ or less, and at least 500 mm$^{-1}$ or more, 600 mm$^{-1}$ or more, 700 mm$^{-1}$ or more, 800 mm$^{-1}$ or more, or 900 mm$^{-1}$ or more. In addition, Spc may be more preferably in the range of $500 \ mm^{-1} \leq Spc \leq 1100 \ mm^{-1}$, but is not limited to these ranges, and may be set to a range of a combination of the maximum and minimum values. The Spc is the roughness by the number of peaks, that is, a measure of the steepness of the peaks.

In the above, Sdr (degree of increase in the interfacial area) may be at most 0.15 or less, 0.1 or less, 0.05 or less, 0.03 or less, or 0.02 or less, and at least 0.005 or more, 0.01 or more, or 0.015 or more. In addition, Sdr may be more preferably in the range of $0.005 \leq Sdr \leq 0.03$, but is not limited to these ranges, and may be set to a range of a combination of the maximum and minimum values. The Sdr means a degree of increase in the interfacial area, that is, an area ratio increased with respect to an area when the measurement area of the developed area (surface area of the measured shape) is viewed vertically.

In the above, the meanings of Sa, Sz, Spc, and Sdr are described, but they are used with the same meanings as commonly used in this field.

In one embodiment of the present invention, any one of the one or more layers of the negative electrode active material layer may have a porosity of 55 to 70%, more preferably 62 to 67%. If the porosity satisfies the above range, a desirable effect can be obtained in terms of securing the uniformity of the coating layer in the electrode.

In the above, the porosity of the negative electrode active material layer is a value calculated by using the weight and thickness values of the negative electrode active material layer.

In one embodiment of the present invention, any one of the one or more layers of the negative electrode active material layer may comprise 60 to 80% by weight of carbon material particles containing 3 to 10 at% of oxygen, 10 to 30% by weight of metal particles, and 3 to 20% by weight of a binder.

In addition, any one of the one or more layers of the negative electrode active material layer may comprise 65 to 75% by weight of carbon material particles containing 3 to 10 at% of oxygen, 20 to 30% by weight of metal particles, and 4 to 8% by weight of a binder.

In one embodiment of the present invention, the carbon material particles and metal particles may be comprised in the form of a carbon material-metal composite.

Recently, for example, an anodeless lithium-ion secondary battery comprising a negative electrode active material layer containing a metal, which forms an alloy with lithium, and carbon material has been studied variously as an all-solid-state lithium-ion secondary battery.

The negative electrode active material layer is formed as a very thin film with a micro thickness, and is manufactured in a form comprising a carbon material-metal composite in which carbon material particles and metal particles are combined. However, the conventional carbon material-metal composite had a problem that it is difficult to uniformly distribute carbon material particles and metal particles.

Furthermore, the conventional carbon material-metal composite had a problem that it is very difficult to form a composite with a small particle size. That is, if the particle size of the carbon material-metal composite is too large as compared to a thin film having a micro thickness, since it is difficult to form a negative electrode active material layer with excellent surface roughness and thus the operating characteristics of the battery are also reduced, it is very important to prepare a carbon material-metal composite having a small particle size.

The present invention provides the effect of remarkably improving the above problems of the prior art.

That is, the carbon material-metal composite forms a carbon material-metal composite having a significantly smaller particle size compared to the case prepared using a conventional carbon material. The carbon material forming the composite contains 3 at% or more of the oxygen, and thus is well mixed with the metal particles and has a characteristic of being uniformly distributed with the metal particles. Therefore, it is possible to prepare a carbon material-metal composite with excellent component uniformity. In addition, for the above reasons, it is possible to prepare a carbon material-metal composite having a small and uniform particle size.

In one embodiment of the present invention, the carbon material-metal composite may be composed by one or more bonds selected from a chemical bond between the carbon material particle and the metal particle, a van der Waals bond between the carbon material particle and the metal particle, and a bond between the carbon material particle and the metal particle by a binder. The chemical bond may be a metal (e.g., Ag)-O bond between the metal particle (e.g., Ag) and oxygen contained in the carbon material

In one embodiment of the present invention, the carbon material-metal composite may comprise 60 to 90% by weight of a carbon material and 10 to 40% by weight of metal, based on the total weight. In addition, the carbon material-metal composite may comprise 70 to 80% by weight of a carbon material and 20 to 30% by weight of metal, based on the total weight.

In addition, the carbon material-metal composite may further include 3 to 10% by weight of a binder based on the total weight of the composite. For example, in the wet preparation of the carbon material-metal composite, a binder dissolved in a solvent together with carbon material particles and metal particles may be used. In this case, a binder may be comprised in the carbon material-metal composite. If the binder is comprised, the content of the carbon material described above may be comprised in a content range reduced by the content of the binder.

In one embodiment of the present invention, the carbon material particles having a particle size (D50) of 10 nm to 100 nm or 20 nm to 60 nm may be used, and the metal particles having a particle size (D50) of 20 nm to 100 nm, 20 nm to 60 nm, or 30 nm to 60 nm may be used.

In one embodiment of the present invention, the carbon material-metal composites may have a particle size (D50) of $0.1 \mu$m to $0.5 \mu$m. The upper limit of the particle size may be $0.4 \mu$m or $0.3 \mu$m.

In addition, the maximum particle size of the carbon material-metal composite may be $3 \mu$m or less, $2 \mu$m or less, $1.5 \mu$m or less, or $1 \mu$m or less.

If the particle size of the carbon material-metal composite is too large as compared to a thin film having a micro thickness, since it is difficult to form a negative electrode active material layer with excellent surface roughness and thus the operating characteristics of the battery are also reduced, it is very important to prepare a carbon material-metal composite having a small particle size.

The reason that the operating characteristics of the battery is deteriorated is that if the surface roughness of the negative electrode active material layer is large, the contact with the electrolyte layer is not made sufficiently in the direction toward the electrolyte and it is not helpful for uniform precipitation of lithium in the direction toward the negative electrode current collector.

In an anode-less lithium-ion secondary battery, the thickness of the negative electrode active material layer may be typically formed in a range of 1 $\mu$m to 100 $\mu$m or 10 $\mu$m to 60 $\mu$m, and specifically may be $10 \mu$m, $20 \mu$m, 30mm, $40 \mu$m, $50 \mu$m or the like.

For example, if a carbon material-metal composite having a particle size of 10 $\mu$m is used to form a negative electrode active material layer having a thickness of 20 $\mu$m, it is obvious that it is difficult to form a desirable surface roughness.

If the maximum particle size of the carbon material-metal composite is $3 \mu$m or less, it is preferable because the effect of improving the surface roughness can be obtained more reliably. On the other hand, when the maximum particle size exceeds 3 $\mu$m, it may be difficult to obtain excellent surface roughness when forming a thin film.

The particle size of the carbon material-metal composites may be measured using a particle size analyzer. For example, the particle size can be measured using a Mastersizer 3000 (Malvem panalytical) instrument.

The present invention relates to a slurry of a negative electrode active material comprising the carbon material-metal composite.

The slurry of the negative electrode active material may have a viscosity of 8 Pa·s or less, 7 Pa·s or less, 6 Pa·s or less, or 5 Pa·s or less, at a shear rate of 2.5 s$^{-1}$.

The slurry of the negative electrode active material may comprise 15 to 50% by weight of a carbon material-metal composite, 1 to 10% by weight of a binder (based on a solid component), and 40 to 80% by weight of a solvent, and preferably, 25 to 35% by weight of a carbon material-metal composite, 1 to 5% by weight of a binder, and 60 to 70% by weight of a solvent. In addition, the slurry may further contain additives contained in the slurry of the negative electrode active material in this field.

The present invention relates to a negative electrode active material layer comprising the carbon material-metal composite.

In the negative electrode active material layer, the carbon material and metal are uniformly distributed and the surface roughness is excellent, and thus it provides an effect of improving the operating characteristics of a lithium-ion secondary battery comprising the same.

In addition, the present invention provides a lithium-ion secondary battery comprising the negative electrode described above; a positive electrode; and an electrolyte interposed between the negative electrode and the positive electrode.

The lithium-ion secondary battery may be an anodeless battery.

The lithium-ion secondary battery provides improved operating characteristics by comprising the negative electrode active material layer of the present invention.

In one embodiment of the present invention, the solid electrolyte may be a sulfide-based solid electrolyte.

In one embodiment of the present invention, the lithium-ion secondary battery may be an anodeless battery.

Hereinafter, embodiments of the present invention are more specifically illustrated.

**<Configuration of all-solid-state lithium-ion secondary battery>**

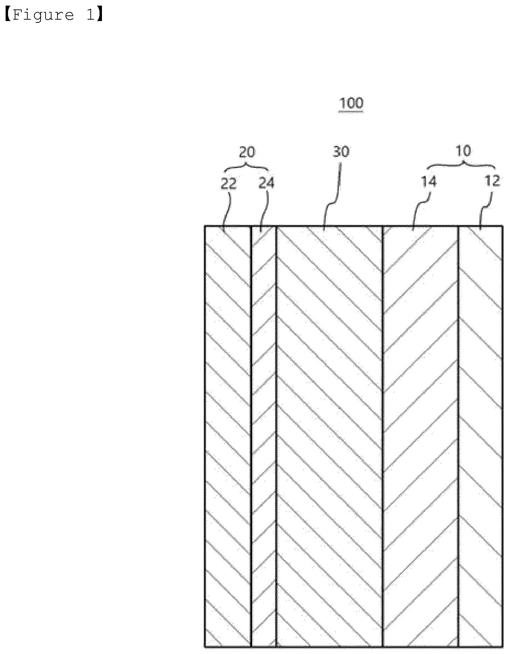

FIG. 1 shows a cross-sectional view schematically showing a schematic configuration of the all-solid-state lithium-ion secondary battery according to an embodiment of the present invention.

The all-solid-state lithium-ion secondary battery 100 according to an embodiment of the present invention is a socalled lithium-ion secondary battery which conducts charging and discharging by moving lithium ions between the positive electrode 10 and the negative electrode 20. Specifically, this all-solid-state lithium-ion secondary battery 100 is composed of a positive electrode 10, a negative electrode 20, and a solid electrolyte layer 30 disposed between the positive electrode 10 and the negative electrode 20, as shown in FIG. 1.

(1) Positive electrode

As shown in FIG. 1, the positive electrode 10 comprises the positive electrode current collector 12 and the positive electrode active material layer 14 that are sequentially disposed toward the negative electrode 20.

The positive electrode current collector 12 may be in a plate shape or a foil shape. The positive electrode current collector 12 may be, for example, one type of metal selected from indium, copper, magnesium, stainless steel, titanium, iron, cobalt, nickel, zinc, aluminum, germanium, and lithium, or an alloy of two or more of these metals.

The positive electrode active material layer 14 can reversibly intercalate and de-intercalate lithium ions. The positive electrode active material layer 14 may comprise a positive electrode active material and a solid electrolyte.

The positive electrode active material may be a compound capable of intercalating/de-intercalating lithium. An example of the compound capable of intercalating/de-intercalating lithium may be one represented by any one of Formulas of $Li_aA_{1-b}B'_bD'_2$ (wherein, $0.90 \leq a \leq 1.8$, and $0 \leq b \leq 0.5$); $Li_aE_{1-b}B'_bO_{2-c}D'_c$ (wherein, $0.90 \leq a \leq 1.8$, $0 \leq b \leq 0.5$, $0 \leq c \leq 0.05$); $LiE_{2-b}B'_bO_{4-c}D'_c$ (wherein, $0 \leq b \leq 0.5$, $0 \leq c \leq 0.05$); $Li_aNi_{1-b-c}CO_bB'_cD'_\alpha$ (wherein, $0.90 \leq a \leq 1.8$, $0 \leq b \leq 0.5$, $0 \leq c \leq 0.05$, $0 < \alpha \leq 2$); $Li_aNi_{1-b-c}Co_bB'_cO_{2-\alpha}F'_\alpha$ (wherein, $0.90 \leq a \leq 1.8$, $0 \leq b \leq 0.5$, $0 \leq c \leq 0.05$, $0 < \alpha < 2$); $Li_aNi_{1-b-c}Mn_bB'_cD'_\alpha$ (wherein, $0.90 \leq a \leq 1.8$, $0 \leq b \leq 0.5$, $0 \leq c \leq 0.05$, $0 < \alpha < 2$); $Li_aNi_{1-b-c}Mn_bB'_cO_{2-\alpha}F'_\alpha$ (wherein, $0.90 \leq a \leq 1.8$, $0 \leq b \leq 0.5$, $0 \leq c \leq 0.05$, $0 < \alpha < 2$); $Li_aNi_bE_cG_dO_2$ (wherein, $0.90 \leq a \leq 1.8$, $0 \leq b \leq 0.9$, $0 \leq c \leq 0.5$, $0.001 \leq d \leq 0.1$); $Li_aNi_bCo_cMn_dG_eO_2$ (wherein, $0.90 \leq a \leq 1.8$, $0 \leq b \leq 0.9$, $0 \leq c \leq 0.5$, $0 \leq d \leq 0.5$, $0.001 \leq e \leq 0.1$); $Li_aNiG_bO_2$ (wherein, $0.90 \leq a \leq 1.8$, $0.001 \leq b \leq 0.1$); $Li_aCoG_bO_2$ (wherein, $0.90 \leq a \leq 1.8$, $0.001 \leq b \leq 0.1$); $Li_aMnG_bO_2$ (wherein, $0.90 \leq a \leq 1.8$, $0.001 \leq b \leq 0.1$); $Li_aMn_2G_bO_4$ (wherein, $0.90 \leq a \leq 1.8$, $0.001 \leq b \leq 0.1$); $QO_2$; $QS_2$; $LiQS_2$; $V_2O_5$; $LiV_2O_5$; $LiI'O_2$; $LiNiVO_4$; $Li_{(3-f)}J_2(PO_4)_3$ $(0 \leq f \leq 2)$; $Li_{(3-f)}Fe_2(PO_4)_3$ $(0 \leq f \leq 2)$; and $LiFePO_4$.

In the above formula, A is Ni, Co, Mn, or a combination thereof; B' is Al, Ni, Co, Mn, Cr, Fe, Mg, Sr, V, a rare earth element, or a combination thereof; D' is O, F, S, P, or a combination thereof; E is Co, Mn, or a combination thereof; F' is F, S, P, or a combination thereof; G is Al, Cr, Mn, Fe, Mg, La, Ce, Sr, V, or a combination thereof; Q is Ti, Mo, Mn, or a combination thereof; I' is Cr, V, Fe, Sc, Y, or a combination thereof; J is V, Cr, Mn, Co, Ni, Cu, or a combination thereof.

Specific examples of the positive electrode active material may be lithium salts such as lithium cobaltate (hereinafter referred to as LCO), lithium of nickelate, lithium nickel cobaltate, lithium nickel cobalt aluminate (hereinafter referred to as NCA), and lithium nickel cobalt manganate (hereinafter referred to as NCM), lithium manganate and lithium iron phosphate, and lithium sulfide. The positive electrode active material layer 14 may comprise only one or also two or more selected from these compounds as a positive electrode active material.

The positive electrode active material may comprise a lithium salt of a transition metal oxide having a layered rock salt-type structure among the lithium salts described above. Here, the "layered rock salt-type structure" is a structure in which oxygen atomic layers and metal atomic layers are alternately and regularly arranged in the direction of the cubic rock salt-type structure, and as a result, each atomic layer forms a two-dimensional plane. In addition, the "cubic rock salt-type structure" means a sodium chloride-type structure which is one kind of crystal structure. For example, the "cubic rock salt-type structure" refers to a structure in which face-centered cubic lattices formed by each of the positive ions and the negative ions are displaced from each other by 1/2 of the edge of the unit lattice.

The lithium salt of a transition metal oxide having such a layered rock salt-type structure may be, for example, a ternary lithium transition metal oxide such as $LiNi_xCo_yAl_zO_2$(NCA) or $LiNi_xCo_yMn_zO_2$(NCM) (wherein, $0 < x < 1$, $0 < y < 1$, $0 < z < 1$, $x + y + z = 1$). The positive electrode active material layer 14 may improve energy density and thermal stability of the all-solid-state lithium-ion secondary battery 100 by comprising the lithium salt of the ternary transition metal oxide having such a layered rock salt-type structure as a positive electrode active material.

Here, the shape of the positive electrode active material may be, for example, a particle shape such as a true spherical shape or an elliptical spherical shape. In addition, the particle diameter of the positive electrode active material is not particularly limited, and may be within a range applicable to the positive electrode active material of a typical all-solid-state lithium-ion secondary battery. In addition, the content of the positive electrode active material in the positive electrode active material layer 14 is not also particularly limited, and is possible if it is within the range applicable to the positive electrode of a typical all-solid-state lithium-ion secondary battery.

Of course, one having a coating layer on the surface of the compounds may be used, or a mixture of the compounds and a compound having a coating layer may be also used. The coating layer may comprise a coating element compound of oxide or hydroxide of the coating element, oxyhydroxide of the coating element, oxycarbonate of the coating element, or hydroxycarbonate of the coating element. The compound constituting these coating layers may be amorphous or crystalline. The coating element contained in the coating layer may be Mg, Al, Co, K, Na, Ca, Si, Ti, V, Sn, Ge, Ga, B, As, Zr, or a mixture thereof. The coating layer forming process may use any coating method (e.g., spray coating, dipping, etc.), as long as it can be coated in a way that does not adversely affect the properties of the positive electrode active material by using these elements in the compound, and a detailed description thereof will be omitted since it can be well understood by those engaged in the art.

A specific example of the coating layer may be $Li_2O$-$ZrO_2$.

The solid electrolyte contained in the positive electrode active material layer 14 may also be the same as or different from the solid electrolyte contained in the solid electrolyte layer 30 to be described later.

In addition, the positive electrode active material layer 14 may be one obtained by appropriately mixing additives such as an electrically conductive agent, a binder (adhesive agent), a filler, a dispersant, or an ion conductive auxiliary agent, as well as the above-described positive electrode active material and solid electrolyte.

The electrically conductive agent may be, for example, graphite, carbon black, acetylene black, Ketjen black, carbon fiber, or metal powder. In addition, the binder (adhesive agent) may be, for example, styrene-butadiene rubber (SBR), polytetrafluoroethylene, polyvinylidene fluoride, or polyethylene. In addition, the filler, the dispersant, the ion conductive auxiliary agent or the like may be a known material typically used for an electrode of an all-solid-state lithium-ion secondary battery.

(2) Negative electrode

The negative electrode 20 may include a negative electrode current collector 22 and a negative electrode active material layer 24 sequentially disposed toward the positive electrode 10.

The negative electrode current collector 22 may be in a plate shape or a foil shape. The negative electrode current collector 22 may comprise a material that does not react with lithium, that is, does not form any one of alloy or a compound with lithium. The material constituting the negative electrode current collector 22 may be, for example, copper, stainless steel, titanium, iron, cobalt, nickel and the like. The negative electrode current collector 22 may be composed of one of these metals, or may be composed of an alloy or a clad (coating) material of two or more of these metals.

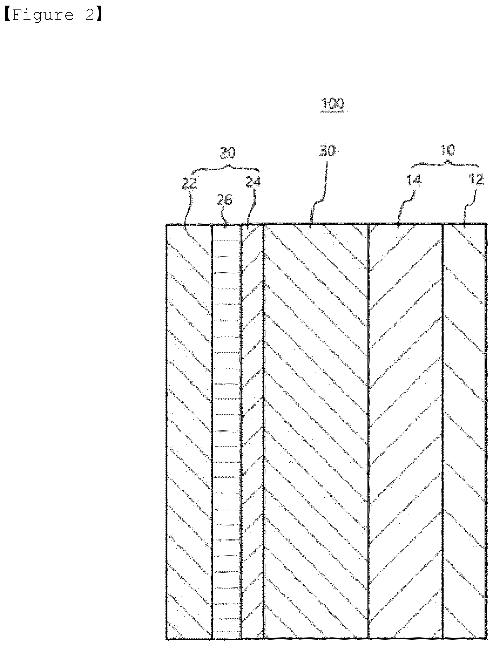

The negative electrode active material layer 24 may not contain lithium in the negative electrode current collector 22, in the negative electrode active material layer 24, or between the negative electrode active material layer 24 and the solid electrolyte layer 30 in an initial state or a state after complete discharging. As will be described later, if the all-solid-state lithium-ion secondary battery 100 according to an embodiment is overcharged, the negative electrode active material contained in the negative electrode active material layer 24 and lithium ions that have moved from the positive electrode 10 form an alloy or a compound, and the metal layer 26 containing lithium as a main component may be formed (precipitated) on the negative electrode 20, as shown in FIG. **2.** The metal layer 26 may be precipitated and disposed between the negative electrode current collector 22 and the negative electrode active material layer 24, in negative electrode active material layer 24 or both. The metal layer 26 containing lithium as a main component between the negative electrode current collector 22 and the negative electrode active material layer 24 may be disposed closer to the negative electrode current collector 22 than the negative electrode active material layer 24.

The negative electrode active material layer 24 according to an embodiment may comprise Ag as a negative electrode active material. Accordingly, the metal layer 26 formed during overcharging may include a Li (Ag) alloy including a $\gamma$1 phase, a $\beta$Li phase, or a combination thereof in which Ag is solid-dissolved in lithium. Therefore, during discharging, only Li is dissolved in the Li (Ag) alloy constituting the metal layer 26 and solid-dissolved Ag is remained, thereby suppressing the occurrence of voids. In this case, the content of Ag in the precipitated Li-Ag solid solution may be 60% by weight or less. If the content is within such a range, it is possible to effectively suppress a decrease in the average discharging potential due to the influence of Ag. On the other hand, if the content of Ag in the precipitated Li-Ag solid solution is too small, the amount of Ag remaining during discharging is decreased, and the generation of voids may not be sufficiently suppressed. For this reason, the content of Ag in the precipitated Li-Ag solid solution may be 20% by weight or more, for example, 40% by weight or more.

If the content of Ag contained in the negative electrode active material layer 24 is too small, since the Ag remaining during discharging is also reduced, the occurrence of voids may not be suppressed. For this reason, the negative electrode active material layer 24 contains Ag in an amount of 10% by weight or more, for example, 20% by weight or more, based on 100% by weight of the total weight of the negative electrode active material contained in the negative electrode active material layer, in the initial state without charging and discharging.

The negative electrode active material layer 24 may further comprise, for example, one or more selected from amorphous carbon, Au, Pt, Pd, Si, Al, Bi, Sn, In, and Zn as an optional negative electrode active material in addition to Ag.

The carbon material contained in the negative electrode active material layer 24 may preferably be amorphous carbon. However, the carbon material is not limited to amorphous carbon. Specific examples of the amorphous carbon may be carbon black such as acetylene black, furnace black and Ketjen black, graphene, or a combination thereof.

The sum of negative electrode active materials other than Ag may be 50 % by weight or more, for example 70 % by weight or more, based on 100% by weight of the total weight of the negative electrode active material contained in the negative electrode active material layer 24. The content of the negative electrode active material other than Ag can be measured in the same way as the content of Ag.

The negative electrode active material layer 24 may further comprise a binder (adhesive agent). The negative electrode active material layer 24 can be stabilized on the negative electrode current collector 22 by comprising a binder (adhesive agent). The material constituting the binder (adhesive agent) may be, for example, a resin material such as styrene-butadiene rubber (SBR), polytetrafluoroethylene, polyvinylidene fluoride, and polyethylene. The binder (adhesive agent) may be composed of one or more selected from these resin materials

In addition, the negative electrode active material layer 24 may be in a state in which additives, for example, a filler, a dispersant, an ionically conductive agent, and the like used in conventional all-solid-state lithium-ion secondary batteries are suitably blended. Specific examples of the additive are the same as those described in the above-described positive electrode.

The total thickness of the negative electrode active material layer 24 is not particularly limited, but may be 1 $\mu$m to 100 $\mu$m, or 10 $\mu$m to 60 $\mu$m. If the thickness of the negative electrode active material layer 24 is less than 1 $\mu$m, the performance of the all-solid-state secondary battery may not be sufficiently improved. If the thickness of the negative electrode active material layer 24 exceeds 100 $\mu$m, since the resistance of the negative electrode active material layer 24 is high, as a result, the performance of the all-solid-state secondary battery may not be sufficiently improved. If the above-described binder is used, the thickness of the negative electrode active material layer 24 can be easily secured at an appropriate level.

On the other hand, a film containing a material capable of forming an alloy or a compound with lithium on the negative electrode current collector 22 is further comprised, and the film may be disposed between the negative electrode current collector 22 and the negative electrode active material layer.

The negative electrode current collector 22 does not react with lithium metal, but may make it difficult to precipitate a smooth lithium metal layer thereon. The film may also be used as a wetting layer to allow lithium metal to be flatly precipitated on the negative electrode current collector 22.

A material capable of forming an alloy with lithium metal used in the film may comprise silicon, magnesium, aluminum, lead, silver, tin, or a combination thereof. the materials capable of forming compounds with lithium metal used in the film may include carbon, titanium sulfide, iron sulfide, or a combination thereof. The content of the material used in the film may be small within a limit that does not affect the electrochemical properties of the electrode and/or the redox potential of the electrode. The film may be applied flatly on the negative electrode current collector 22 to prevent cracking during the charging cycle of the all-solid-state lithium-ion secondary battery 100. The film may be applied by a method such as physical vapor deposition such as evaporation or sputtering, chemical vapor deposition, or plating method.

The thickness of the film may be 1 nm to 500 nm. The thickness of the film may be, for example, 2 nm to 400 nm. The thickness of the film may be, for example, 3 nm to 300 nm. The thickness of the film may be, for example, 4 nm to 200 nm. The thickness of the film may be, for example, 5 nm to 100 nm.

(3) Solid electrolyte layer

The solid electrolyte layer 30 is disposed between the positive electrode 10 and the negative electrode 20 (e.g., between the positive electrode active material layer 14 and the negative electrode active material layer 24). The solid electrolyte layer 30 comprises a solid electrolyte capable of transporting ions. The solid electrolyte layer 30 may comprise a sulfide-based solid electrolyte.

The sulfide-based solid electrolyte may comprise $Li_2S-P_2S_5$, $Li_2S-P_2S_5$-LiX(X is a halogen element), $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$(m and n are positive numbers, and Z is one of Ge, Zn, or Ga), $Li_2S-GeS_2$, $Li_2S-SiS_2-Li_3PO_4$, $Li_2S-SiS_2-Li_pMO_q$(p and q are positive numbers, and M is one of P, Si, Ge, B, Al, Ga or In), or a combination thereof. The solid electrolyte may be composed of one material or two or more materials selected from these sulfide-based solid electrolyte materials.

The sulfide-based solid electrolyte may comprise a solid electrolyte represented by Formula 1 below:

$$<\text{Formula 1}> \quad Li_xM'_yPS_zA_w$$

wherein,

x, y, z, and w are each independently 0 or more and 6 or less;
M' is at least one of As, Ge, Ga, Sb, Si, Sn, Al, In, Ti, V, Nb, or Ta; and
A is at least one of F, Cl, Br, or I.

As a solid electrolyte, one containing sulfur (S), phosphorus (P), and lithium (Li) as constituent elements among the sulfide-based solid electrolyte materials may be used. For example, one containing $Li_2S-P_2S_5$ may be used. When using one containing $Li_2S-P_2S_5$ as the sulfide-based solid electrolyte material, the mixing molar ratio of $Li_2S$ and $P_2S_5$ may be selected, for example, in the range of $Li_2S:P_2S_5 = 50:50$ to $90:10$.

Also, the solid electrolyte may be in an amorphous state or in a crystalline state. In addition, the solid electrolyte may be in a mixture of amorphous and crystalline forms.

The solid electrolyte layer 30 may further comprise a binder (adhesive agent). The binder (adhesive agent) material may be, for example, a resin such as styrene-butadiene rubber (SBR), polytetrafluoroethylene, polyvinylidene fluoride, polyethylene, or polyacrylic acid. The binder (adhesive agent) material may be the same as or different from the material constituting the binder (adhesive agent) in the positive electrode active material layer 14 and the negative electrode active material layer 24.

(4) Constitution of all-solid-state lithium-ion secondary battery

The all-solid-state lithium-ion secondary battery 100 of the present invention is an all-solid-state lithium-ion secondary battery 100 including a positive electrode 10, a solid electrolyte layer 30, and a negative electrode 20 in this order, as shown in FIG. 1. The negative electrode 20 comprises a negative electrode current collector 22 and a negative electrode active material layer 24, and the negative electrode active material layer 24 comprises a carbon material and a metal capable of forming an alloy with lithium.

The negative electrode current collector 22 may include a Ni foil, a Ni-coated Cu foil, a stainless-steel foil, or a combination thereof. The negative electrode current collector 22 may have a further improved discharge capacity.

**<Manufacturing method of all-solid-state lithium-ion secondary battery>**

Next, a method of manufacturing the all-solid-state lithium-ion secondary battery 100 will be described. The all-solid-state lithium-ion secondary battery 100 according to an embodiment can be obtained by manufacturing the positive electrode 10, the negative electrode 20, and the solid electrolyte layer 30, respectively, and then stacking the above layers.

(1) Positive electrode manufacturing process
The positive electrode manufacturing process is described as an example as follows. First, a material constituting the positive electrode active material layer 14 (a positive electrode active material, a binder (adhesive agent), etc.) is added to a non-polar solvent to prepare a slurry (or paste). Then, the obtained slurry is applied on the prepared positive electrode current collector 12, and dried to obtain a laminate. Next, the obtained laminate is pressurized using, for example, hydrostatic pressure to obtain a positive electrode 10. Also, the pressing process is omitted.

(2) Negative electrode manufacturing process

The negative electrode manufacturing process is described as an example as follows. First, a material constituting the negative electrode active material layer 24 (a carbon material, a metal forming an alloy with lithium, a binder, etc.) is added to a polar solvent or a non-polar solvent to prepare a slurry (which may be a paste). Then, the obtained slurry is applied on the prepared negative electrode current collector 22 to form a negative electrode active material layer.
If the negative electrode active material layer further includes one or more layers, the additional layers may be stacked in the same manner as above.
Next, the laminate obtained by the above method is pressurized using, for example, hydrostatic pressure to manufacture the negative electrode 20. In addition, the pressurization process may be omitted. In addition, the method of applying the slurry to the negative electrode current collector 22 is not particularly limited, and for example, may be a screen-printing method, a metal mask printing method, an electrostatic coating method, a dip coating method, a spray coating method, a roll coating method, a doctor blade method, a gravure coating method, and the like.
In the above, the method of forming the negative electrode active material layer in two layers has been described, but even when an additional layer is formed, a slurry to form each layer is prepared, and each layer is sequentially stacked according to the stacking order by the method described above to manufacture a negative electrode.

(3) Solid electrolyte layer manufacturing process

The solid electrolyte layer 30 may be made of, for example, a solid electrolyte including a sulfide-based solid electrolyte material.
First, a starting material (e.g., $Li_2S$, $P_2S_5$, etc.) is treated by a melt quenching method or a mechanical milling method to obtain a sulfide-based solid electrolyte material. For example, when the melt quenching method is used, the starting materials are mixed in a predetermined amount, and obtained mixture is pelletized, reacted in a vacuum at a predetermined reaction temperature, and then quenched to prepare a sulfide-based solid electrolyte material. In addition, the reaction temperature of the mixture of $Li_2S$ and $P_2S_5$ may be 400 °C ~ 1000 °C, for example, 800 °C ~ 900 °C. In addition, the reaction time may be 0.1 hours to 12 hours, for example, 1 hour to 12 hours. In addition, the quenching temperature of the reactant may be 10 °C or less, for example, 0 °C or less, and the quenching rate may be usually 1 °C/sec to 10000 °C/sec, for example, 1 °C/sec to 1000 °C/sec.
In addition, when a mechanical milling method is used, the starting materials are stirred and reacted using a ball mill or the like to prepare a sulfide-based solid electrolyte material. In addition, the stirring speed and stirring time in the mechanical milling method are not particularly limited, but the faster the stirring speed, the faster the production rate of the sulfide-based solid electrolyte material, and the longer the stirring time, the higher the conversion rate of the raw material to the sulfide-based solid electrolyte material.
Thereafter, the obtained mixed raw material (sulfide-based solid electrolyte material) is heat-treated at a predetermined temperature, and then it is pulverized to prepare a particle-shaped solid electrolyte. If the solid electrolyte has a glass transition point, it is sometimes changed from amorphous to crystalline by heat treatment.
Next, the solid electrolyte obtained by the above method can be formed into a film using a known film forming method such as an aerosol position method, a cold spray method, or a sputtering method, for example, to prepare the solid electrolyte layer 30. Also, the solid electrolyte layer 30 may be manufactured by pressing solid electrolyte particles. In addition, the solid electrolyte layer 30 may be prepared by mixing a solid electrolyte, a solvent, and a binder, applying the mixture, and drying and pressing the same.

(4) Stacking process

The solid electrolyte layer 30 is disposed between the positive electrode 10 and the negative electrode 20, and these are pressurized using, for example, hydrostatic pressure to obtain an all-solid-state lithium-ion secondary battery 100 according to an embodiment.
The all-solid-state lithium-ion secondary battery 100 of the present invention may not need to apply a high external pressure using an end plate or the like, and may provide improved discharge capacity, even if the external pressure applied to the positive electrode 10, the negative electrode 20 and the solid electrolyte layer 30 during use is 1 MPa or less.

<Charging method of all-solid-state lithium-ion secondary battery>

Next, a charging method of the all-solid-state lithium-ion secondary battery 100 will be described.

In the charging method of the all-solid-state lithium-ion secondary battery 100 according to an embodiment, the all-solid-state lithium-ion secondary battery 100 may be charged (i.e., overcharged) in excess of the charging capacity of the negative electrode active material layer 24.

At the beginning of charging, lithium may be intercalated into the negative electrode active material layer 24. When the battery is charged beyond the charging capacity of the negative electrode active material layer 24, lithium is precipitated on the back side of the negative electrode active material layer 24, that is, between the negative electrode current collector 22 and the negative electrode active material layer 24, as shown in FIG. 2, and the metal layer 26, which was not present during manufacture, may be formed by the precipitated lithium. During discharging, lithium in the negative electrode active material layer 24 and the metal layer 26 is ionized and may migrate toward the positive electrode 10. Therefore, in the all-solid-state lithium-ion secondary battery 100 of the present invention, lithium can be used as a negative electrode active material. In addition, since the negative electrode active material layer 24 coats the metal layer 26, it can function as a protective layer of the metal layer 26 and at the same time, can suppress precipitation and growth of dendritic metal lithium. In this way, a short circuit and a decrease in capacity of the all-solid-state lithium-ion secondary battery 100 may be suppressed, and further, characteristics of the all-solid-state lithium-ion secondary battery 100 may be improved. In addition, according to one embodiment, since the metal layer 26 is not formed in advance, it is possible to reduce the manufacturing cost of the all-solid-state lithium-ion secondary battery 100.

In addition, the metal layer 26 is not limited to being formed between the negative electrode current collector 22 and the negative electrode active material layer 24, and may be formed inside the negative electrode active material layer 24, as shown in FIG. 2. In addition, the metal layer 26 may be formed both between the negative electrode current collector 22 and the negative electrode active material layer 24 and inside the negative electrode active material layer 24.

The all-solid-state lithium-ion secondary battery 100 of the present invention may be manufactured in a unit cell having a structure of positive electrode/separator/negative electrode, or a bi-cell or a unit cell having a structure of positive electrode/separator/negative electrode/separator/positive electrode, or in the structure of a stacked battery in which the structure of the unit cell is repeated.

The shape of the all-solid-state lithium-ion secondary battery 100 of the present invention is not particularly limited, and for example, may be exemplified as a coin type, a button type, a sheet type, a stacked type, a cylindrical shape, a flat type, a horn type, etc. For example, the all-solid-state lithium-ion secondary battery 100 may also be used in a hybrid vehicle such as a plug-in hybrid electric vehicle (PHEV). In addition, it can be used in fields requiring a large amount of power storage. For example, it may be used for an electric bicycle or a power tool.

Hereinafter, the present invention will be described in detail with reference to examples in order to specifically describe the present invention. However, the examples according to the present invention may be modified in various other forms, and the scope of the present invention should not be construed as being limited to the examples described below. The examples of the present invention are provided in order to more completely explain the present invention to those of ordinary skill in the art.

**Preparation Example 1: Selection of carbon material sample into which oxygen functional groups are introduced**

Various types of commercially available carbon materials were purchased and the oxygen content contained in each carbon material was analyzed in the following way. Carbon black having an oxygen content of 5.2 at% (Sample 1), carbon black having an oxygen content of 2.6 at% (Sample 2), and carbon black having an oxygen content of 1.3 at% (Sample 3) were selected and used, respectively.

<Analysis method>

(1) Analysis instrument
Use of an optoelectronic spectrometer (XPS or ESCA), K-Alpha (Thermo Fisher Scientific)
(2) Analysis method
First, a survey scan spectrum and a narrow scan spectrum for each sample were obtained. The narrow scan spectrum was measured by 4 points for each location to obtain an average and deviation.
(3) ESCA Common Experimental Conditions
X-ray source: Monochromated Al Ka (1486.6 eV)
X-ray spot size: $400\mu$m
Operation mode: CAE (Constant Analyzer Energy) mode

Survey scan: pass energy 200 eV, energy step 1 eV
Narrow scan: scanned mode, pass energy 50 eV, energy step 0.1 eV
Charge compensation: flood gun off
SF: Al THERMO1, ECF: TPP-2M, BG subtraction: Smart

Table 1:

| Component | Carbon black sample 1 | | Carbon black sample 2 | | Carbon black sample 3 | |
|---|---|---|---|---|---|---|
| | Average (at%) | Devia tion | Average (at%) | Devia tion | Average (at%) | Devia tion |
| O | 5.2 | 0.1 | 2.6 | 0.2 | 1.3 | 0.2 |
| C | 94.5 | 0.1 | 97.2 | 0.2 | 98.3 | 0.2 |
| S | 0.3 | 0.04 | 0.3 | 0.03 | 0.4 | 0.04 |

**Example 1 and Comparative Examples 1~2: Preparation of slurry of negative electrode active material**

6 g of carbon black (Sample 1, Sample 2, or Sample 3) having a particle size (D50) of 40 nm to 60 nm, 2 g of Ag having a particle size (D50) of 40 nm to 60 nm, 9.33 g of PVdF binder (6% solids), and 7.19 g of NMP solution were placed in a Thinky mixer container and mixed 12 times at 2000 rpm each for 3 minutes, respectively. Thereafter, 5 g of NMP solution was added and mixed 5 times each for 3 minutes at 2000 rpm, respectively, to prepare a slurry of the negative electrode active material of Example 1 (using carbon black with oxygen content of 5.2 at%), a slurry of the negative electrode active material of Comparative Example 1 (using carbon black with oxygen content of 2.6 at%), and a slurry of the negative electrode active material of Comparative Example 2 (using carbon black with an oxygen content of 1.3 at%), respectively.

**Experimental Example 1: Measurement of particle size of carbon material-metal composite**

(1) Separation of carbon material-metal composite sample
A part of the carbon material-metal composite contained in the slurry of the negative electrode active materials of Example 1 and Comparative Example 1 was diluted in NMP solution to prepare an analysis sample.
(2) Analysis instrument

Particle size analysis was performed using the particle size analyzer model name Mastersizer 3000 (Malvem panalytical).
Specifically, carbon material-metal composite analysis sample 1 (Example 1, comprising carbon black having an oxygen content of 5.2 at%) and carbon material-metal composite analysis sample 2 (comprising carbon black having an oxygen content of 2.6 at%) prepared in (1) above are placed into the sample inlet of the device so as to be 10-15% of laser obscuration, respectively, and measurement was performed.
The analyzer can analyze a particle size range of 0.01 $\mu$m to 3500 $\mu$m, and is a particle size analyzer suitable for wet and dry dispersion types through laser diffraction.

(3) Result of analysis

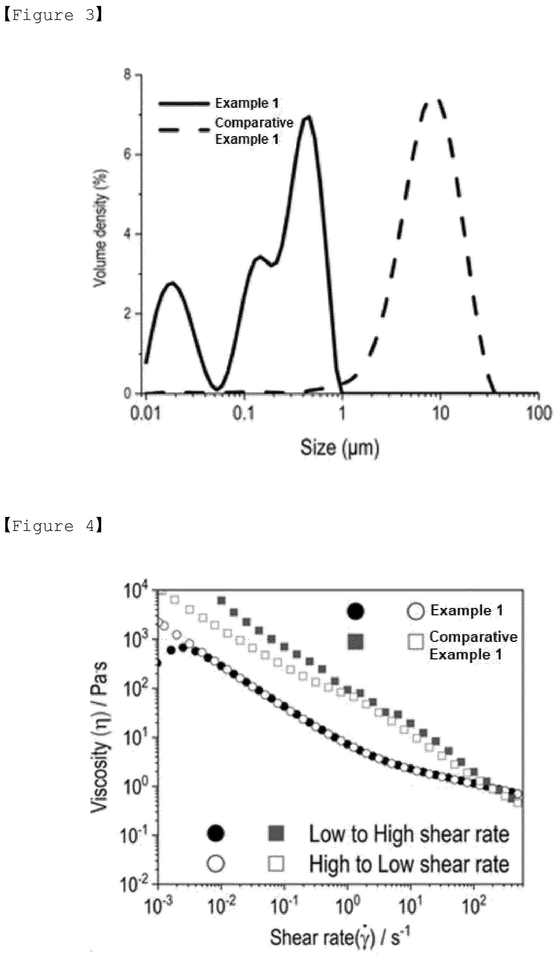

The result of particle size analysis of the carbon material-metal composite analysis sample 1 and sample 2 are shown in Table 2 and FIG. 3.

Table 2:

| | D10 ($\mu$m) | D50 ($\mu$m) | D90 ($\mu$m) |
|---|---|---|---|
| Carbon material-metal composite analysis sample 1 (comprising carbon black having oxygen content: 5.2 at%) | 0.019 | 0.261 | 0.623 |
| Carbon material-metal composite analysis sample 2 (comprising carbon black having oxygen content: 2.6 at%) | 3.14 | 8.26 | 18.3 |

From the results of Table 2, it can be seen that the particle size of the carbon material-metal composite comprising carbon black having an oxygen content of 5.2 at% is significantly smaller than the particle size of the carbon material-metal composite comprising carbon black having an oxygen content of 2.6 at%.

Also, according to the results of the analysis shown in FIG. 3, it can be seen that the maximum particle size of carbon material-metal composite comprising carbon black with oxygen content of 5.2 at% is $1\mu$m or less which is significantly smaller than the particle size of carbon material-metal composite comprising carbon black with oxygen content of 2.6 at%.

**Experimental Example 2: Measurement of rheological properties of slurry of negative electrode active material**

The rheological properties of the slurry of the negative electrode active material of Example 1 (using carbon black with an oxygen content of 5.2 at%) and the slurry of the negative electrode active material of Comparative Example 1 (using carbon black with an oxygen content of 2.6 at%) were measured using a Rheometer, model name DHR-1 (TA instrument).

At this time, a 40mm parallel plate was used as the geometry, and the viscosity of the slurry according to shear was measured through a flow test. The oscillation frequency test was performed before and after the measurement of viscosity.

The results of the measurement of the rheological properties are shown in FIG. 4.

In the case of a slurry having excellent dispersibility, the rate of decrease in viscosity with increasing shear is similar, and the change in viscosity with decreasing shear after increasing shear is also similar. In the flow test, viscosity curvature occurs because the particles are not dispersed so that large particles interfere with the flow of other small particles.

As confirmed in FIG. 4, it was found that the slurry of Example 1 does not show any inflection point within the graph, and the change in viscosity when the shear rate was increased and then decreased is also almost similar. Therefore, it can be seen from these results that the slurry of Example 1 has excellent dispersibility.

On the other hand, the slurry of Comparative Example 1 showed an inflection point within the graph and showed an irreversible behavior when the shear rate was increased and then decreased. This result means that the agglomeration phenomenon occurs in the slurry.

In general, when the viscosity at a shear rate of 2.5 $s^{-1}$ is 10 Pa·s or less, the coatability of the slurry is excellent. Under these criteria, it was confirmed that the slurry of Example 1 has a viscosity of 4.134 Pa·s at a shear rate of 2.5 $s^{-1}$ and thus has excellent coatability. On the other hand, it was confirmed that the slurry of Comparative Example 1 has a viscosity of 52.546 Pa·s at a shear rate of 2.5 $s^{-1}$, and thus has poor coatability.

**Example 2 and Comparative Examples 3~5: Manufacturing of negative electrode**

The slurry of each negative electrode active material prepared in Example 1 and Comparative Examples 1 and 2 was coated on SUS foil to a thickness of 10 $\mu$m and dried to manufacture negative electrodes of Example 2 (using carbon black with an oxygen content of 5.2 at%), Comparative Example 3 (using carbon black with an oxygen content of 2.6 at%), Comparative Example 4 (using carbon black with an oxygen content of 1.3 at%), and Comparative Example 5 (using carbon black with an oxygen content of 2.4 at%).

**Experimental Example 3: Measurement of oxygen content of negative electrode active material layer**

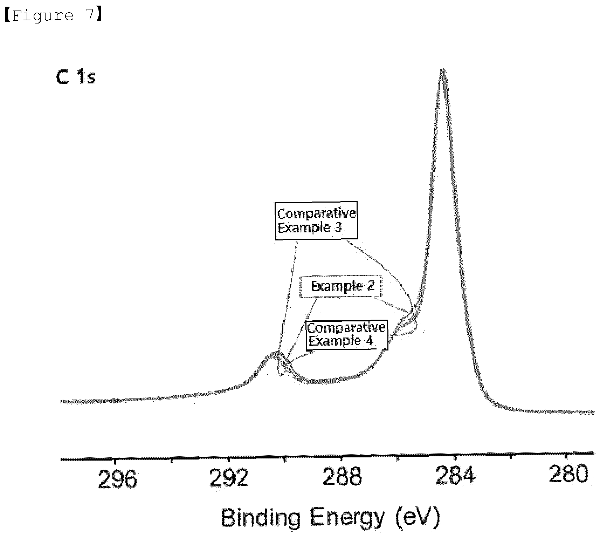

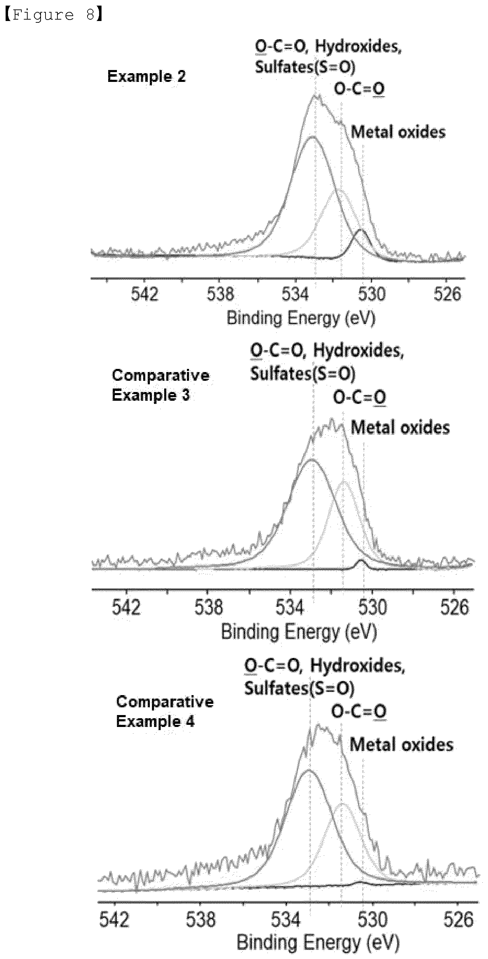

The oxygen content contained in the negative electrode active material layer stacked on the negative electrodes prepared in Example 2, Comparative Example 3, and Comparative Example 4 was analyzed in the following way, and the results are shown in Table 3, FIG. 7 and FIG. 8.

**<Analysis method>**

(1) Analysis instrument
Use of an optoelectronic spectrometer (XPS or ESCA), Nexsa4 (Thermo Fisher Scientific)
(2) Analysis method
First, a survey scan spectrum and a narrow scan spectrum for each sample were obtained. The narrow scan spectrum was measured by 4 points for each location, and the average and deviation were obtained. Next, a survey scan spectrum and a narrow scan spectrum were obtained while proceeding with the depth profile. The depth profile was performed up to 5000 seconds using monatomic Ar ions.

(3) Experimental and data processing condition

X-ray source: Monochromated Al Ka(1486.6 eV)
X-ray spot size: $400\mu$m
Sputtering gun: Monatomic Ar(energy: 1000 ev, current: Mid, raster width: 2.0 mm)
Etching rate: 0.2 nm/s $Ta_2O_5$ Criteria (which may vary depending on sample)
Operation mode: CAE(Constant Analyzer Energy) mode
Survey scan: pass energy 200 eV, energy step 1 eV
Narrow scan: pass energy 50 eV, energy step 0.1 eV
Charge compensation: flood gun off
SF: Al THERMO1, ECF: TPP-2M, BG subtraction: Smart

**<Results of analysis>**

(1) Elemental ratio of the surface of the negative electrode active material layer

The element ratio of the surface of the negative electrode active material layer was measured as shown in Table 3 below.

Table 3:

| Element | Example 2 | | Comparative Example 3 | | Comparative Example 4 | |
|---|---|---|---|---|---|---|
| | Average (at%) | Deviat ion | Average (at%) | Deviat ion | Average (at%) | Deviat ion |
| C | 79.1 | 0.1 | 81.5 | 0.4 | 81.2 | 0.1 |
| O | 2.7 | 0.02 | 1.7 | 0.04 | 1.1 | 0.03 |
| F | 17.2 | 0.1 | 15.5 | 0.5 | 16.6 | 0.1 |
| Ag | 0.8 | 0.01 | 1.0 | 0.02 | 0.8 | 0.01 |
| S | 0.2 | 0.01 | 0.3 | 0.01 | 0.3 | 0.01 |
| Sum | 100 | | 100 | | 100 | |

From the results of Table 3 above, it can be seen that the content of oxygen contained in the surface of the negative electrode active material layer is proportional to the content of oxygen contained in the carbon material comprised in the negative electrode active material layers prepared in Example 2, Comparative Example 3, and Comparative Example 4.

FIG. 7 shows the 1s spectrum of carbon (C) contained in the negative electrode active material layers prepared in Example 2, Comparative Example 3, and Comparative Example 4. According to FIG. 7, it can be seen that the chemical state of carbon (C) is similar in all negative electrode active material layers prepared in Example 2, Comparative Example 3, and Comparative Example 4.

FIG. 8 shows the peak deconvolution results in the O 1s spectrum for oxygen contained in the negative electrode active material layers prepared in Example 2, Comparative Example 3, and Comparative Example 4. From the spectrum above, it can be seen that as the content of oxygen contained in the carbon material constituting the negative electrode active material layer is increased (Example 2 > Comparative Example 3 > Comparative Example 4), the peak of the metal oxides is increased. The peak of the metal oxides appears to be due to the bonding of Ag and oxygen on the surface of the carbon material, which just means that the more oxygen on the surface of the carbon material, the better the dispersibility of Ag.

Table 4 below shows the FIG. 8 numerically.

Table 4:

| O 1s peak deconvolution (%) | | | |
|---|---|---|---|
| | Metal oxides | O-C=$\underline{O}$ | $\underline{O}$-C=O, hydroxides, sulfates (S=O) |
| Example 2 | 6.8 | 29.8 | 63.4 |
| Comparative Example 3 | 1.1 | 33.6 | 65.4 |

(continued)

| O 1s peak deconvolution (%) | | | |
|---|---|---|---|
| | Metal oxides | O-C=O | O-C=O, hydroxides, sulfates (S=O) |
| Comparative Example 4 | 0.4 | 35.3 | 64.2 |

**Experimental Example 4: Measurement of surface roughness of negative electrode active material layer**

The surface roughness of the negative electrode active material layers stacked on the negative electrodes prepared in Example 2 and Comparative Example 5 was measured using a 3D laser confocal microscope apparatus (manufactured by KEYENCE company).

Specifically, the negative electrode to measure the roughness was prepared with an appropriate size. At this time, three or more samples were prepared for the same electrode in order to ensure data reliability and to check the deviation of roughness within the sample. These samples were attached onto the slide glass so as not to be crumpled using double-sided tape.

The slide glass to which the prepared sample was attached was placed on a measurement stage, and then, focused and the roughness was measured.

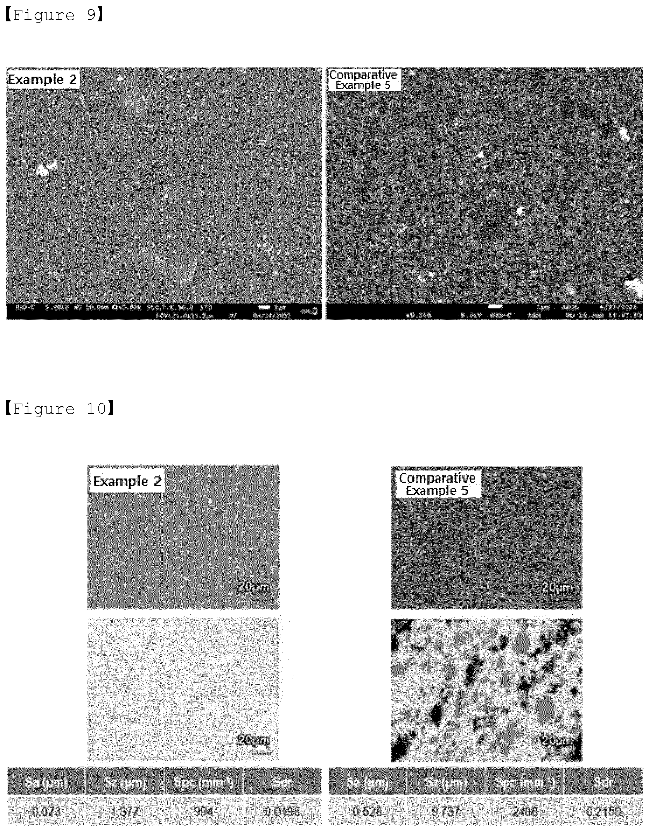

The SEM image of the negative electrode active material layer stacked on the negative electrode prepared in Example 2 and Comparative Example 5 is shown in FIG. 9, and the results of the measurement of the surface roughness are shown in Table 5 and FIG. 10 below.

Table 5:

| | Sa ($\mu$m) | Sz ($\mu$m) | Spc (mm$^{-1}$) | Sdr |
|---|---|---|---|---|
| Example 2 | 0.073 | 1.377 | 994 | 0.0198 |
| Comparative Example 5 | 0.528 | 9.737 | 2408 | 0.2150 |

**Experimental Example 5: Analysis of density and porosity of negative electrode active material layer**

The density and porosity of the negative electrode active material layers stacked on the negative electrodes prepared in Example 2 and Comparative Examples 3 to 5 were calculated, and the results are shown in Table 6 below.

Table 6:

| | True density of negative electrode active material layer (g/ml) | Porosity (%) |
|---|---|---|
| Example 2 | 2.389 | 64.5 |
| Comparative Example 3 | 2.389 | 72.3 |
| Comparative Example 4 | 2.389 | 73.3 |
| Comparative Example 5 | 2.389 | 77.8 |

**Manufacturing of all-solid-state lithium-ion secondary batteries of Example 3 and Comparative Examples 6 and** 7

The positive electrode loaded with a positive electrode active material at 5 mAh/cm$^2$ in a current collector is used as a positive electrode, the negative electrodes prepared in Example 2 and Comparative Examples 3 to 4 were used as the negative electrode, and a sulfide-based all-solid-state electrolyte (LPSCl composition) was used as an electrolyte to manufacture pouch-type monocells of Example 3, Comparative Example 6, and Comparative Example 7.

**Experimental Example 6: Evaluation of characteristics of the battery**

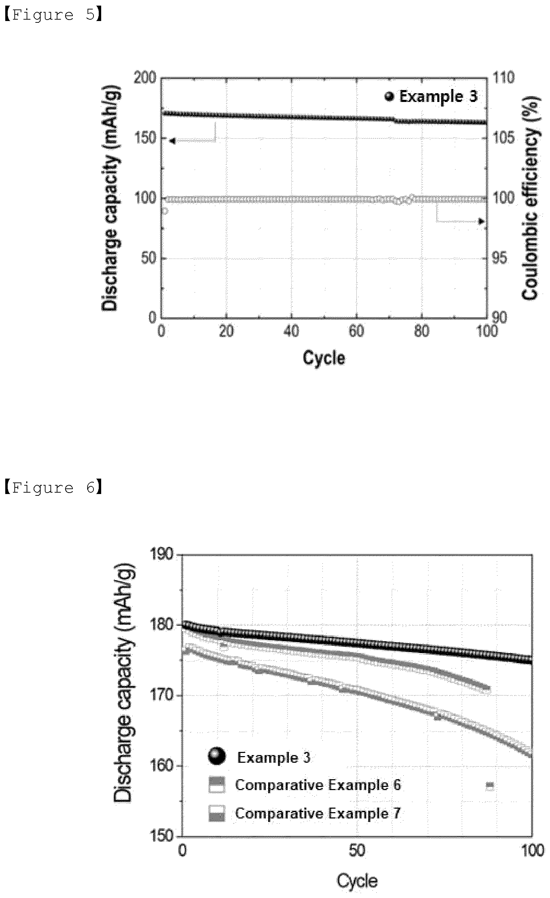

The pouch-type monocells of Example 3, Comparative Example 6, and Comparative Example 7 were operated under the following charging/discharging conditions at an operating voltage range of 4.25V-3.0V and an operating temperature of 60 °C to evaluate the cycle characteristics, and the results are shown in FIGS. 5 and 6.

Charging condition: 0.33C, 4.25V CC/CV, 0.1C cut-off

Discharging condition: 0.33C, 3.0V, CC
From FIG. 5, it can be seen that in the case of the cell of Example 3, as the cycle progresses, it is operated without significant degradation of the cell capacity.

Also, from FIG 6, it can be seen that in the case of the cell of Example 3, the cycle characteristics are significantly superior compared to the cells of Comparative Example 6 and Comparative Example 7.

**Claims**

1.  A negative electrode, comprising:

    a current collector, and
    a negative electrode active material layer,
    wherein the negative electrode active material layer comprises one or more layers, and
    wherein any one of the one or more layers of the negative electrode active material layer contains oxygen in an amount of 2 to 10 at%.

2.  The negative electrode according to claim 1, wherein any one of the one or more layers of the negative electrode active material layer further comprises 65 to 85 at% of carbon and 0.5 to 5 at% of a metal element.

3.  The negative electrode according to claim 2, wherein any one of the one or more layers of the negative electrode active material layer comprises carbon material particles and metal particles.

4.  The negative electrode according to claim 3, wherein the carbon material particle is an amorphous carbon material particle.

5.  The negative electrode according to claim 3, wherein the carbon material particle contains 3 to 10 at% of oxygen.

6.  The negative electrode according to claim 5, wherein the oxygen exists in a form contained in a functional group bonded to the carbon material particle.

7.  The negative electrode according to claim 6, wherein the functional group comprises at least one selected from the group consisting of a carboxy group, a hydroxyl group, an ether group, an ester group, an aldehyde group, a carbonyl group, and an amide group.

8.  The negative electrode according to claim 3, wherein the metal particle is a particle that forms an alloy with lithium.

9.  The negative electrode according to claim 8, wherein the metal particle is one or more particles selected from silver (Ag), gold, platinum, palladium, silicon, aluminum, bismuth, tin, indium, and zinc.

10. The negative electrode according to claim 9, wherein the metal particle comprises silver (Ag).

11. The negative electrode according to claim 1, wherein any one of the one or more layers of the negative electrode active material layer has the following surface roughness:

$$0.01 \ \mu m \leq Sa \leq 0.3 \ \mu m$$

$$0.5 \ \mu m \leq Sz \leq 5 \ \mu m$$

$$500 \ mm^{-1} \leq Spc \leq 1500 \ mm^{-1}$$

$$0.005 \leq Sdr \leq 0.15.$$

12. The negative electrode according to claim 1, wherein any one of the one or more layers of the negative electrode active material layer has a porosity of 55 to 70%.

13. The negative electrode according to claim 3, wherein the carbon material particles and the metal particles are comprised in the form of carbon material-metal composites.

14. The negative electrode according to claim 13, wherein the particle size (D50) of the carbon material-metal composites is *0.1* $\mu$m to 0.5 $\mu$m.

15. The negative electrode according to claim 14, wherein the maximum particle size of the carbon material-metal composite is 3 $\mu$m or less.

16. A lithium-ion secondary battery comprising the negative electrode of claim 1; a positive electrode; and an electrolyte interposed between the negative electrode and the positive electrode.

17. The lithium-ion secondary battery according to claim 16, wherein the electrolyte comprises a sulfide-based solid electrolyte.

18. The lithium-ion secondary battery according to claim 17, wherein the lithium-ion secondary battery is an anodeless battery.

【Figure 1】

【Figure 2】

【Figure 3】

【Figure 4】

【Figure 5】

【Figure 6】

【Figure 7】

【Figure 8】

【Figure 9】

【Figure 10】

| Sa (μm) | Sz (μm) | Spc (mm⁻¹) | Sdr | Sa (μm) | Sz (μm) | Spc (mm⁻¹) | Sdr |
|---|---|---|---|---|---|---|---|
| 0.073 | 1.377 | 994 | 0.0198 | 0.528 | 9.737 | 2408 | 0.2150 |

**INTERNATIONAL SEARCH REPORT**

| International application No. |
|---|
| **PCT/KR2023/017305** |

| A. | CLASSIFICATION OF SUBJECT MATTER |
|---|---|

**H01M 4/13**(2010.01)i; **H01M 4/133**(2010.01)i; **H01M 4/134**(2010.01)i; **H01M 4/36**(2006.01)i; **H01M 4/38**(2006.01)i; **H01M 4/583**(2010.01)i; **H01M 10/052**(2010.01)i; **H01M 10/0562**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/13(2010.01); H01M 10/052(2010.01); H01M 10/0525(2010.01); H01M 10/42(2006.01); H01M 4/133(2010.01); H01M 4/1393(2010.01); H01M 4/36(2006.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이온 이차전지(lithium ion secondary battery), 음극(anode), 집전체(current collector), 음극 활물질(anode active material), 산소(oxygen)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 6761965 B2 (NEC CORPORATION et al.) 30 September 2020 (2020-09-30)<br>See claim 1; paragraphs [0003], [0013], [0021]-[0023], [0025], [0028], [0037]-[0039] and [0041]-[0044]; and tables 1 and 3. | 1-6,8-9,12-16 |
| Y | | 7,10-11,17-18 |
| Y | KR 10-1733744 B1 (SAMSUNG SDI CO., LTD.) 25 May 2017 (2017-05-25)<br>See claims 1, 3 and 8-9; and paragraphs [0026]-[0028], [0034] and [0036]. | 7,10-11 |
| Y | KR 10-2020-0052707 A (SAMSUNG ELECTRONICS CO., LTD. et al.) 15 May 2020 (2020-05-15)<br>See abstract; and claims 16-17, 24 and 29. | 17-18 |
| A | KR 10-2010093 B1 (HITACHI CHEMICAL COMPANY, LTD.) 23 October 2019 (2019-10-23)<br>See entire document. | 1-18 |

| ☑ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 February 2024** | **07 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/017305**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2018-0050131 A (LG CHEM, LTD.) 14 May 2018 (2018-05-14)<br>See entire document. | 1-18 |

Form PCT/ISA/210 (patent family annex) (July 2022)

INTERNATIONAL SEARCH REPORT
Information on patent family members

| International application No. |
| --- |
| **PCT/KR2023/017305** |

| Patent document cited in search report | | | Publication date (day/month/year) | Patent family member(s) | | | Publication date (day/month/year) |
| --- | --- | --- | --- | --- | --- | --- | --- |
| JP | 6761965 | B2 | 30 September 2020 | JP | 2019-506708 | A | 07 March 2019 |
| | | | | US | 10714752 | B2 | 14 July 2020 |
| | | | | US | 2019-0006675 | A1 | 03 January 2019 |
| | | | | WO | 2017-122230 | A1 | 20 July 2017 |
| KR | 10-1733744 | B1 | 25 May 2017 | KR | 10-2013-0084457 | A | 25 July 2013 |
| | | | | US | 2013-0183590 | A1 | 18 July 2013 |
| | | | | US | 9012074 | B2 | 21 April 2015 |
| KR | 10-2020-0052707 | A | 15 May 2020 | CN | 111162276 | A | 15 May 2020 |
| | | | | US | 11349114 | B2 | 31 May 2022 |
| | | | | US | 2020-0144599 | A1 | 07 May 2020 |
| KR | 10-2010093 | B1 | 23 October 2019 | CN | 103190018 | A | 03 July 2013 |
| | | | | CN | 103190018 | B | 08 February 2017 |
| | | | | JP | 2014-039477 | A1 | 03 February 2014 |
| | | | | JP | 6003648 | B2 | 05 October 2016 |
| | | | | KR | 10-2013-0098356 | A | 04 September 2013 |
| | | | | WO | 2012-039477 | A1 | 29 March 2012 |
| KR | 10-2018-0050131 | A | 14 May 2018 | KR | 10-2158147 | B1 | 21 September 2020 |

**REFERENCES CITED IN THE DESCRIPTION**

**Patent documents cited in the description**

- KR 1020220144769
- KR 1020230148135

- KR 1020150064697